# DEMANDE DE BREVET EUROPEEN

(11) **EP 2 071 899 A1**
(43) Date de publication de la demande: **17.06.2009**
(21) Numéro de dépôt: 08171522.9
(22) Date de dépôt: 12.12.2008
(51) Int. Cl.: H04W 88/06

(54) **Procédé de commande d'un terminal de communication bimode**

(30) Priorité: 14.12.2007 FR 0759833
(71) Demandeur: Alcatel Lucent, 75008 Paris (FR)
(72) Inventeur: Hiribarren, Vincent, 91620, NOZAY (FR); Bazin, Claire, 91620, NOZAY (FR)
(74) Mandataire: El Manouni, Josiane

(57) **Abrégé**

Dans le procédé, on surveille un état d'une interface (6) de connexion radio du terminal à un réseau local (10) tout en maintenant une connexion radio (4) du terminal à un réseau de téléphonie mobile (9).

De préférence, on effectue l'étape de maintien en donnant à la connexion (4) au réseau de téléphonie mobile un degré de priorité pour la réception et/ou l'envoi de données et/ou de communications inférieur à celui d'une connexion (6) au réseau local lorsque cette dernière est active.

## Description

L'invention concerne les terminaux de télécommunication tels que les téléphones mobiles.

On connaît des terminaux de télécommunication comprenant d'une part une interface de connexion radio à un réseau local et d'autre part une interface de connexion radio à un réseau de téléphonie mobile.

Le réseau local est par exemple un réseau d'entreprise, Il a généralement une portée assez réduite, par exemple d'environ 100 mètres. Le terme "Wifi" désigne l'une des normes permettant, sans fil c'est-à-dire par ondes radio, la communication au sein d'un tel réseau local. Par définition, l'accès à ce réseau est limité localement de sorte que l'accès est interrompu lorsque le téléphone quitte la ou les zones couvertes par les points d'accès au réseau. Ces derniers sont en petit nombre de sorte que les zones couvertes forment une étendue restreinte, par opposition à un réseau de téléphonie mobile qui peut s'étendre sur des dizaines de kilomètres carrés et même au-delà. De plus, ce type de réseaux ne supporte pas le transfert des connexions radio d'un point d'accès à un autre, ce qui contribue aux limitations de ces réseaux.

Quant aux réseaux de téléphonie mobile, ils sont de différents types, On connaît par exemple les réseaux de deuxième génération dits « 2G » ou « GSM » ("Global System for Mobile Communication") permettant des échanges de type voix uniquement. On connaît aussi les réseaux de troisième génération ou « 3G » qui s'appuient sur la norme UMTS (pour "Universal Mobile Telecommunications System"), De plus, contrairement aux réseaux locaux évoqués plus haut, les réseaux de téléphonie mobile supportent le transfert des connexions radio d'un point d'accès à un autre, de sorte que le téléphone peut basculer sa connexion d'un point à un autre de façon transparente pour l'utilisateur.

Les terminaux bimodes sont donc aptes à communiquer sur l'un ou l'autre des réseaux local et de téléphonie mobile selon les circonstances. De tels terminaux permettent d'accéder aux services offerts par l'architecture IMS (pour "IP Multimedia Subsystem"). Cette architecture permet de fournir des services multimédias fixes et mobiles, comme par exemple la technologie appelée VoIP ou "voix sur IP", à savoir la transmission de la voix selon un protocole Internet, ou encore le service de présence qui permet de connaître à tout moment l'état de disponibilité de ses contacts. Ces terminaux permettent donc d'accéder à de tels services dans la plupart des lieux (grâce au réseau de téléphonie mobile) ou moyennant un accès à large bande passante et bon marché (grâce au réseau local).

Toutefois, le basculement du terminal d'un réseau à l'autre souléve certaines difficultés. Il en va de même pour l'utilisation simultanée des deux interfaces de communication du terminal. Ainsi, l'emploi de la technologie VoIP sur un réseau tel que le réseau 3G demeure coûteux. Par ailleurs, concernant le réseau local, il peut arriver que le terminal quitte une zone couverte par le point d'accès au réseau local sans que son inscription à l'IMS via ce réseau ait été clôturée au préalable de façon adaptée. Il s'avère donc difficile de faire en sorte qu'un utilisateur demeure joignable ou encore de conserver à jour des informations relatives à sa présence sur l'un ou l'autre des réseaux au moyen d'un tel terminal.

Face à ces difficultés, on peut réaliser un enregistrement multiple du terminal via l'architecture IMS qui est standardisée pour les opérateurs de téléphonie. Elle permet d'activer simultanément les connexions du terminal au réseau local et au réseau de téléphonie mobile afin d'utiliser les services offerts par l'IMS. Il est également possible de donner une plus grande priorité à l'inscription du terminal via le réseau local que via le réseau de téléphonie mobile afin de rendre prioritaire les communications sur le réseau local. Dans ces conditions, si l'une des interfaces de communication réseau n'est pas disponible, le module IMS du terminal est capable de connecter ce dernier au moyen de l'autre interface sachant qu'il utilisera de préférence l'interface de connexion au réseau local.

Toutefois, ce mode de fonctionnement s'avère lui aussi insuffisant.

Par exemple, si le terminal désactive l'interface de connexion au réseau local pour économiser de l'énergie, il pourra se voir confronté à la réception d'une requête de session VoIP sur l'interface du réseau de téléphonie mobile (par exemple le réseau 3G) même si un point d'accès au réseau local est accessible dans le voisinage. L'utilisateur sera alors amené à employer le réseau de téléphonie mobile pour recevoir cette requête sans savoir que le réseau local pourrait assurer la même prestation.

Par ailleurs, dans le cas d'une telle désactivation de l'interface de connexion au réseau local, il se peut que l'IMS perde du temps à tenter d'envoyer des données au terminal via l'interface de connexion au réseau local avant d'essayer l'interface de connexion au réseau de téléphonie mobile.

Enfin, lorsque la connexion au réseau local a été coupée sans être clôturée convenablement, par exemple si le terminal quitte la zone couverte par un point d'accès au réseau local, il va persister sur le serveur de présence IMS concerné des informations erronées concernant la présence du terminal.

Un but de l'invention est d'améliorer l'utilisation des réseaux faite par le terminal.

A cet effet, on prévoit selon l'invention un procédé de commande d'un terminal de télécommunication dans lequel on surveille un état d'une interface de connexion radio du terminal à un réseau local tout en maintenant une connexion radio du terminal à un réseau de téléphonie mobile.

Ainsi, l'interface de connexion du terminal au réseau de téléphonie mobile est utilisée comme un contrôleur de connexion pour mieux gérer la connexion au réseau local. On peut pour cela notamment exploiter les possibilités d'enregistrement multiple de l'IMS. On maintient active la connexion au réseau de téléphonie mobile dans la mesure où elle consomme moins d'énergie que la connexion au réseau local et permet à l'utilisateur de recevoir des appels téléphoniques traditionnels, De plus, la surveillance de l'état de la connexion au réseau local permet d'exécuter les actions nécessaires lorsque cet état change. Des exemples vont être présentés plus loin.

Avantageusement, on effectue l'étape de maintien en donnant à la connexion au réseau de téléphonie mobile un degré de priorité pour la réception et/ou l'envoi de données et/ou de communications inférieur à celui de la connexion au réseau local lorsque cette dernière est active.

Ainsi, on tire parti en priorité des possibilités offertes par la connexion au réseau local, cette dernière étant généralement meilleur marché que la connexion au réseau de téléphonie mobile.

De préférence, on met en oeuvre le procédé au moyen d'un module de type IMS du terminal.

Avantageusement, dans le cas où la connexion au réseau local vient à être interrompue, on annule, au moyen de la connexion au réseau de téléphonie mobile, une inscription relative à la connexion au réseau local.

Cette interruption peut être due par exemple au fait que le terminal passe en mode d'économie d'énergie ou encore au fait que la connectivité au réseau local devient trop faible. Ainsi, il ne persiste pas sur le réseau des informations erronées concernant la disponibilité du terminal sur le réseau local. On évite donc qu'un coeur IMS n'essaye vainement d'envoyer des données au terminal via le réseau local avant de passer au réseau de téléphonie mobile. En effet, les informations de présence ayant été mises à jour, les données à destination du terminal seront directement envoyées via le réseau de téléphonie mobile.

Avantageusement, dans le cas où la connexion au réseau local est inactive, on autorise le terminal à recevoir et/ou à transmettre, au moyen de la connexion au réseau de téléphonie mobile, des informations d'au moins un type prédéterminé, par exemple des informations de mise à jour d'une disponibilité du terminal sur le réseau de téléphonie mobile et/ou sur le réseau local.

Ainsi, le réseau se trouve informé du fait que le terminal est maintenant connecté via le réseau de téléphonie mobile. On peut prévoir que cette connexion se fait avec une connectivité réduite ou encore qu'elle est réservée aux appels téléphoniques traditionnels. Ce peut être le cas par exemple si le terminal n'active pas l'interface de connexion au réseau local pour des raisons d'économie d'énergie. De plus, la mise à jour des informations relative à au moins l'un des réseaux permet d'éviter de voir persister des informations obsolètes.

Avantageusement, dans le cas où la connexion au réseau local est inactive et où le terminal reçoit une requête de session sur la connexion au réseau de téléphonie mobile, on émet sur le terminal à destination d'un utilisateur du terminal au moins une des propositions suivantes :
- refuser la requête;
- accepter la requête ;
- réactiver la connexion au réseau local pour rediriger la session sur cette connexion s'il existe un point d'accès qui le permet.

Ainsi, on utilise au mieux les différentes possibilités du terminal face à la requête d'une session de voix sur IP. il est notamment possible d'éviter que cette session se déroule sur le réseau de téléphonie mobile lorsque le réseau local est accessible. Une telle requête sera par exemple une requête de type "*push-to-view*". Ce dernier service permet, à partir d'un terminal, d'entrer directement en conversation avec une liste de correspondants prédéfinie. Il permet ainsi à la fois une conversation de personne à personne à la manière d'un combinè de type talkie-walkie. Mais il permet surtout à une personne d'appeler un groupe entier. Pour parler, il suffit par exemple de presser une touche sur le terminal et tous les contacts entendent le message. Pour écouter les personnes du groupe, il n'y a qu'à relâcher cette touche. Il n'y a donc plus de numéro à composer et plus de contacts à appeler les uns après les autres. En outre, les utilisateurs partagent de la vidéo en temps réel et ainsi choisissent les interlocuteurs avec qui partager leur vidéo par transmission audiovisuelle en temps réel.

On prévoit également selon l'invention un terminal de télécommunication qui comprend :
- une interface de connexion radio à un réseau local;
- une interface de connexion radio à un réseau de téléphonie mobile ; et
- des moyens pour surveiller un état de la connexion de l'interface au réseau local tout en maintenant la connexion de l'interface au réseau de téléphonie mobile.

On prévoit également selon l'invention un programme d'ordinateur comprenant des instructions aptes à commander la mise en oeuvre d'un procédé selon l'invention.

On prévoit encore selon l'invention un support d'enregistrement comprenant un tel programme.

On prévoit enfin selon l'invention la mise à disposition d'un tel programme en vue de son téléchargement.

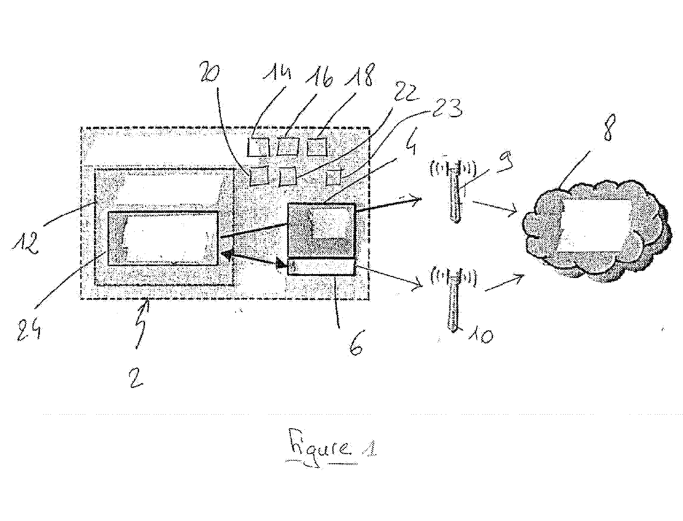

D'autres caractéristiques et avantages de l'invention apparaîtront encore dans la description suivante d'un mode préféré de réalisation donné à titre d'exemple non limitatif en référence à la figure unique qui illustre un terminal selon l'invention mettant en oeuvre un procédé selon l'invention.

On a illustré sur la figure un terminal 2 de télécommunication selon l'invention. Il s'agit en l'espèce d'un téléphone mobile. Mais l'invention pourrait également être mise en oeuvre sur des terminaux de télécommunication d'un autre type tels qu'un assistant personnel de type PDA ou encore un ordinateur portable.

Le terminal 2 comprend une interface 4 pour sa connexion à un réseau de téléphonie mobile ou réseau de téléphonie cellulaire. Il s'agit en l'espèce d'un réseau de troisième génération ou réseau 3G fonctionnant selon la norme UMTS. Mais le réseau pourrait être d'un autre type, par exemple un réseau de type 2,75G ou encore 3,5G (ou 3G+ ou super 3G), voire 4G. L'interface 4 est apte à connecter le terminal 2 au réseau de téléphonie mobile en utilisant l'architecture ou coeur IMS 8 via un point d'accès 9 de ce réseau ayant une zone de couverture dans laquelle se trouve le terminal 2.

Le terminal 2 comprend également une interface 6 pour sa connexion à un réseau local tel qu'un réseau domestique ou un réseau de petite entreprise. Il s'agira par exemple d'une connexion selon la norme Wifi. L'interface 6 est apte à connecter le terminal au réseau local via un point d'accès 10 de ce dernier ayant une zone de couverture dans laquelle se trouve le terminal 2.

Les connexions assurées par les interfaces 4 et 6 sont des connexions radio sans fil.

Le terminal 2 comprend un module IMS 12 ou client IMS. il s'agit d'un programme d'ordinateur enregistré dans le terminal et comprenant des instructions permettant de commander le terminal et plus précisément les interfaces 4 et 6 afin de mettre le terminal en communication avec l'IMS par l'intermédiaire de l'un ou l'autre des deux réseaux.

Le terminal comprend naturellement une ou plusieurs antennes 14 de communication radio, un écran 16 permettant d'afficher des informations ou des images pouvant être vues par l'utilisateur du terminal ainsi qu'un clavier 18 permettant à ce dernier d'entrer des informations dans le terminal. Le terminal comprend un processeur 20, une ou plusieurs mémoires 22 et une batterie 23.

Le terminal comprend un module 24 de ou coordinateur, de la connectivité du terminal. En l'espèce, ce module est un programme intégré au programme du client IMS 12. Ces programmes sont par exemple enregistrés dans la mémoire 22. On peut prévoir d'enregistrer le programme du module 24 sur un autre support d'enregistrement ou encore de le mettre à disposition sur un réseau de télécommunication tel qu'lnternet, en vue de son téléchargement. Ce module comprend des instructions lui permettant de commander le fonctionnement du terminal selon le procédé de i'invention dans le mode de mise en oeuvre que l'on va décrire.

Le coordinateur 24 active la connexion de l'interface 4 au réseau de téléphonie mobile si elle ne l'est pas déjà. De même, il active la connexion de l'interface 6 au réseau local si elle ne l'est pas déjà.

Plus précisément, il commande l'interface 4 pour que la connexion au réseau de téléphonie mobile soit toujours active. Ainsi, cette connexion est toujours disponible si besoin pour recevoir des appels téléphoniques et on tire parti du fait que cette connexion consomme moins d'énergie que la connexion au réseau local. Cette connexion au réseau de téléphonie mobile s'effectue toutefois en l'espèce moyennant un enregistrement "léger" de l'interface 4 à l'architecture IMS. Elle est effectuée en effet avec un degré de priorité moins élevé que le degré de priorité de l'enregistrement potentiel à l'IMS de la connexion de l'interface 6 au réseau local, pour la réception et/ou l'envoi de données et/ou de communications. De plus, cette inscription par le réseau de téléphonie mobile se fait en souscrivant un nombre réduit de services via l'interface 4. Par exemple, la signalisation de la présence du terminal en association avec l'utilisateur sera faite de préférence via l'interface 6 associée au réseau local.

Tout en maintenant une connectivité réduite de l'interface 4 avec le réseau de téléphonie mobile, le coordinateur maintient une connexion normale de l'interface 6 au réseau local si cela est possible (par exemple si cette connexion locale n'est pas désactivée par le terminal pour des raisons d'économie d'énergie et que le terminal se trouve dans une zone couverte par un point d'accés). Par conséquent, les communications du terminal ont lieu en priorité via l'interface 6, Le terminal est donc de préférence à la fois enregistré via l'interface 4 et via l'interface 6 avec un plus fort degré de priorité sur la connexion assurée par cette dernière.

Pendant qu'il maintient la connexion de l'interface 4, le coordinateur 24 surveille toutefois l'état de l'interface 6 afin de pouvoir agir si nécessaire, notamment si cet état change.

Par exemple, si l'utilisateur portant le terminal sort de la zone couverte par le point d'accès 10 au réseau local, la liaison au réseau local est brutalement interrompue. Le coordinateur 24 détecte alors que l'interface 6 n'a plus de connexion active, il clôture donc l'inscription à l'IMS de l'interface 6 au réseau local Cette clôture se fait par l'envoi d'un message adapté sur le réseau de téléphonie mobile au moyen de l'interface 4. Le coordinateur informe en outre le serveur de présence que le terminal 2 a dorénavant une connectivité réduite sur le réseau local et qu'il ne peut être atteint que par le réseau de téléphonie mobile.

Ces étapes sont également mises en oeuvre lorsque l'interruption de la connexions du terminal au réseau local est due non à un déplacement de l'utilisateur hors de la zone de couverture par le point d'accès mais résulte du passage du terminal à un mode d'économie d'énergie. Dans ce dernier cas, le terminal refusera de réactiver l'interface 6 tant qu'il n'est pas de nouveau alimenté en énergie ou n'a pas atteint un niveau de charge prédéterminé sur la batterie 23. Il est donc particulièrement utile que l'IMS reçoie une mise à jour des informations relatives à l'accessibilité du terminal.

Une fois que la connexion au réseau local a été interrompue, il se peut que le terminal reçoive une requête de session via l'interface 4. Il s'agit par exemple d'une session de *push-to-view*. Dans le présent mode de réalisation, le coordinateur 24 adresse alors à l'utilisateur du terminal un message, par exemple un message sonore ou un message sur l'écran du terminal. Dans ce message, il lui propose au moins l'une des options suivantes, et de préférence les trois en lui offrant la possibilité de choisir l'une d'entre elles:
- refuser cette requête ;
- accepter cette requête sur l'interface 4 associée au réseau de téléphonie mobile; et
- réactiver la connexion au réseau local par l'interface 6 et rediriger la session sur cette dernière dans la mesure où un point d'accès au réseau local est suffisamment proche pour permettre l'établissement d'une telle connexion.

Par ailleurs, lorsque l'interface 6 a détecté qu'elle se trouve dans une zone couverte par un point d'accès au réseau local et que la connexion du terminal à ce réseau par cette interface a été rétablie, le coordinateur 24 détecte le retour de cette connexion. Les communications et transferts de données auront donc lieu à nouveau par priorité via le réseau local et non plus via le réseau de téléphonie mobile. Toutefois, la connexion à ce dernier reste active, même si c'est sous un mode non prioritaire.

L'invention permet au terminal de communiquer de façon à la fois flexible et efficace. Dans ce mode de réalisation, on utilise les possibilités offertes par l'enregistrement multiple de l'architecture IMS. Mais l'invention va au-delà d'un enregistrement multiple sur l'IMS. En effet, elle utilise les possibilités de l'interface 4 de communication avec le réseau mobile, peu gourmande en énergie et qui peut demeurer connectée même en mode d'économie d'énergie, afin de pallier aux carences éventuelles et temporaires de l'interface 6 de communication avec le réseau local. Toutefois, l'interface de communication sur le réseau mobile est utilisée le moins possible pour favoriser l'interface associée au réseau local lorsque cela est envisageable.

L'interface 4 associée au réseau de téléphonie mobile permet donc de mieux gérer la connexion au réseau local, l'absence de cette connexion, son interruption brutale ou son rétablissement. Grâce à l'invention, l'utilisateur du terminal est toujours joignable quelles que soient les circonstances dès qu'un des réseaux est disponible et ses informations de présence concernant les réseaux sont toujours parfaitement à jour. De plus, on utilise au maximum de leurs capacités, et notamment dès que cela est permis, les possibilités de connexion bon marché et à largue bande passante offertes par l'interface de connexion au réseau local.

Bien entendu, on pourra apporter à l'invention de nombreuses modifications sans sortir du cadre de celle-ci.

L'invention est utilisable en remplaçant le réseau 3G par un autre réseau de téléphonie mobile.

## Revendications

1. Procédé de commande d'un terminal (2) de télécommunication, **caractérisé en ce qu'**on surveille un état d'une interface (6) de connexion radio du terminal à un réseau local (10) tout en maintenant une connexion radio (4) du terminal à un réseau de téléphonie mobile (9).

2. Procédé selon la revendication précédente, dans lequel on effectue l'étape de maintien en donnant à la connexion (4) au réseau de téléphonie mobile un degré de priorité pour la réception et/ou l'envoi de données et/ou de communications inférieur à celui d'une connexion (6) au réseau local lorsque cette dernière est active.

3. Procédé selon l'une quelconque des revendications précédentes dans lequel on met en oeuvre le procédé au moyen d'un module (12) de type IMS du terminal.

4. Procédé selon l'une quelconque des revendications précédentes dans lequel, dans le cas où la connexion (6) au réseau local vient à être interrompue, on annule, au moyen de la connexion (4) au réseau de téléphonie mobile, une inscription relative à la connexion au réseau local.

5. Procédé selon l'une quelconque des revendications précédentes dans lequel, dans le cas où la connexion (6) au réseau local est inactive, on autorise le terminal (2) à recevoir et/ou à transmettre, au moyen de la connexion (4) au réseau de téléphonie mobile (9), des informations d'au moins un type prédéterminé, par exemple des informations de mise à jour d'une disponibilité du terminal sur le réseau de téléphonie mobile et/ou sur le réseau local.

6. Procédé selon l'une quelconque des revendications précédentes dans lequel, dans le cas où la connexion (6) au réseau local est inactive et où le terminal (2) reçoit une requête de session sur la connexion (4) au réseau de téléphonie mobile, on émet sur le terminal à destination d'un utilisateur du terminal au moins une des propositions suivantes :
- refuser la requête ;
- accepter la requête ;
- réactiver la connexion (6) au réseau local pour rediriger la session sur cette connexion s'il existe un point d'accès qui le permet.

7. Terminal (2) de télécommunication, **caractérisé en ce qu'**il comprend :
- une interface (6) de connexion radio à un réseau local ;
- une interface (4) de connexion radio à un réseau de téléphonie mobile ; et
- des moyens (24) pour surveiller un état d'une connexion de l'interface (6) au réseau local tout en maintenant une connexion de l'interface (4) au réseau de téléphonie mobile.

8. Programme d'ordinateur (24) comprenant des instructions aptes à commander la mise en oeuvre d'un procédé selon l'une quelconque des revendications 1 à 6.

9. Support d'enregistrement comprenant un programme (24) selon la revendication précédente.

10. Mise à disposition d'un programme selon la revendication 8 en vue de son téléchargement.
